# EUROPEAN PATENT SPECIFICATION

(11) **EP 3 780 046 B1**
(45) Date of publication and mention of the grant of the patent: **13.08.2025**
(21) Application number: 19776472.3
(22) Date of filing: 20.03.2019
(51) Int. Cl.: H01G 9/02, H01G 9/145, H01G 9/15, H01G 11/52

(54) **SEPARATOR FOR ALUMINUM ELECTROLYTIC CAPACITORS, AND ALUMINUM ELECTROLYTIC CAPACITOR**
SEPARATOR FÜR ALUMINIUMELEKTROLYTKONDENSATOREN SOWIE ALUMINIUMELEKTROLYTKONDENSATOR
SÉPARATEUR POUR DES CONDENSATEURS ÉLECTROLYTIQUES EN ALUMINIUM ET CONDENSATEUR ÉLECTROLYTIQUE EN ALUMINIUM

(30) Priority: 29.03.2018 JP 2018064740
(43) Date of publication of application: 17.02.2021
(73) Proprietor: Nippon Kodoshi Corporation, Kochi-shi, Kochi 781-0395 (JP)
(72) Inventor: OCHI, Takafumi, Kochi-shi, Kochi 781-0395 (JP); ISHIGAYASUMI, Masaki, Kochi-shi, Kochi 781-0395 (JP); KUMAOKA, Hironori, Kochi-shi, Kochi 781-0395 (JP)
(74) Representative: Betten & Resch
(86) International application number: PCT/JP2019/011699
(87) International publication number: WO 2019/188659

(56) References cited:
- EP-A1- 1 674 543
- WO-A1-2013/187326
- JP-A- 2010 277 800
- JP-A- 2011 137 962
- JP-A- 2011 228 320
- JP-A- 2011 228 320
- JP-A- 2014 072 361
- JP-A- 2017 162 840
- JP-A- H0 371 618
- US-A1- 2005 255 259
- US-A1- 2012 301 698
- US-A1- 2014 167 329

## Description

### TECHNICAL FIELD

The present invention relates to a separator for aluminum electrolytic capacitors and an aluminum electrolytic capacitor using the separator.

### BACKGROUND ART

In recent years, miniaturization and performance improvement of electronic devices are advancing, and further miniaturization and performance improvement of components installed on a circuit board or the like used in the electronic devices are also in demand.

While one of the components installed on the circuit board is an aluminum electrolytic capacitor, even among aluminum electrolytic capacitors, an aluminum solid electrolytic capacitor (referred to as solid electrolytic capacitor hereafter) using conductive polymers as a cathode material has excellent frequency characteristics and low equivalent series resistance (referred to as 'ESR' hereafter) compared to typical aluminum non-solid electrolytic capacitors (referred to as non-solid electrolytic capacitors hereafter) using an electrolyte as a cathode material, and is used even around a CPU requiring high frequency characteristics.

Moreover, in recent years, conductive polymer hybrid aluminum electrolytic capacitors (referred to as 'hybrid electrolytic capacitors' hereafter) using both conductive polymers and an electrolyte as cathode material are supplied to the market from capacitor manufacturing companies, and are also used for automobile electrical equipment applications requiring low ESR characteristics and no short-circuits.

As described above, the solid electrolytic capacitor and the hybrid electrolytic capacitor are applicable in a wide range from PC and home game devices to automobile electric components that require high heat resistance.

The solid electrolytic capacitor is manufactured by superimposing an electrode foil on a separator and winding them together so as to form a wound element, repairing the defective portion of the aluminum oxide film of the electrode foil, carrying out chemical treatment of unformed portions, such as cut sections and a tab etc. of the electrode foil, forming a conductive polymer layer, and placing it in a case and sealing it. The hybrid electrolytic capacitor is manufactured by forming a conductive polymer layer, impregnating it with an electrolyte, and placing it in a case and sealing it.

The separator used in the solid electrolytic capacitor and the hybrid electrolytic capacitor is proposed as a separator using cellulosic fibers, synthetic resin fibers, or a mixture of cellulosic fibers and synthetic resin fibers, etc.

The conductive polymer layer of the solid electrolytic capacitor and the hybrid electrolytic capacitor may be formed either by impregnating the separator with a polymerization liquid of conductive polymers (monomer solution of conductive polymers and oxidizer solution) and then carrying out polymerization, or by impregnating the separator with a conductive polymer microparticle dispersion liquid and then carrying out dehydration.

Since the solid electrolytic capacitor uses solid conductive polymers as the cathode material, there is no characteristic degradation due to electrolyte evaporation as with non-solid electrolytic capacitors even under high temperature conditions. Moreover, the conduction mechanism of the solid electrolytic capacitor and the hybrid electrolytic capacitor is based on electron conduction, and since responsiveness is better than that of the non-solid electrolytic capacitor using ionic conduction, frequency characteristics are good and ESR is low. Therefore, heat generation of the capacitor when receiving an electric current may also be suppressed. From these characteristics, the solid electrolytic capacitor and the hybrid electrolytic capacitor have considerable advantages as the capacitor mounted on a circuit board from the viewpoint of reduction in resistance and improvement in heat resistance, etc.

In the case of using a separator made of only cellulosic fibers as the separator of the solid electrolytic capacitor and the hybrid electrolytic capacitor, when a polymerization liquid of conductive polymers is used, the cellulose reacts with an oxidizer of the polymerization liquid, consuming the oxidizer, and thereby inhibiting polymerization of the conductive polymers. On the other hand, since the solid electrolytic capacitor using the conductive polymer dispersion liquid has the dispersion liquid with very high viscosity, impregnating ability of the dispersion liquid into the separator is poor.

In order to prevent such a reaction with the oxidant and improve the impregnating ability of the dispersion liquid, the cellulosic separator is heated to a high temperature once a wound element is formed, resulting in formation of the carbonized separator, and conductive polymer layers are then formed. The carbonized cellulosic separator has increased oxidation resistance and lowered reactivity with the oxidant of the polymerization liquid. Moreover, the cellulose fibers constituting the separator get thinner as a result of the carbonization, and gaps in the separator are increased, thereby improving the impregnating ability of the dispersion liquid.

However, manufacturing man-hours are increased due to the carbonization process, making the manufacturing process complicated. In addition, since the cellulose is thermally decomposed as a result of the carbonization, physical strength of the separator is also decreased.

In order to solve such problems of the cellulosic separator, a separator using synthetic resin fibers and a separator using a mixture of cellulosic fibers and synthetic resin fibers, etc. are proposed as a separator usable without carbonization treatment.

The separator using synthetic resin fibers improves the impregnating ability of the polymer dispersion liquid by selecting a material that is compatible with conductive polymers without inhibiting polymerization of the conductive polymers even if it is non-carbonized. Moreover, selection of a material having chemical stability when with the conductive polymers allows performance stabilization when it is used for a solid electrolytic capacitor and a hybrid electrolytic capacitor.

Furthermore, as described above, on-vehicle use of solid electrolytic capacitors and hybrid electrolytic capacitors is also increasing in recent years. Components used in automobiles may have external vibration or impact in a high temperature environment, and high reliability of a capacitor used here that can endure use over a long period of time in a severe environment is in demand. Therefore, the separator used for on-vehicle capacitors requires higher electrical characteristics as well as higher heat resistance and resistance against vibration.

Until now, as a separator for solid electrolytic capacitors using synthetic resin fibers that have a high melting point, a high softening temperature, and high oxidation resistance, a separator using polyester fibers (Patent Document 1), a separator using acrylic fibers (Patent Document 2), and separators using polyamide fibers (Patent Documents 3 and 4) etc. are proposed, contributing to increase in thermostability of the solid electrolytic capacitor.

JP 2011-228320 A discloses a separator for a solid electrolytic capacitor made of a wet type nonwoven fabric containing a solvent spun cellulose fiber and a synthetic fiber as essential components, containing no coating, and having a porosity of 60.0-86.0%, and the freeness variation of the solvent spun cellulose fiber measured based on JIS P8121 except that sample concentration is set at 0.1% by using a 80 mesh wire net having a wire diameter of 0.14 mm and an opening of 0.18 mm as a sieve plate is 0-250 ml. The solid electrolytic capacitor is equipped with the separator.

US 2005/255259 A1 discloses thermal transfer image receiving sheet containing a substrate having thereon a porous intermediate layer and an image receiving layer in that order, wherein the porous intermediate layer has a void ratio of not less than 30%; the porous intermediate layer contains inorganic microparticles; and the porous intermediate layer and the image receiving layer are formed by a coating method.

### Prior Art Documents

### Patent Documents

Patent Document 1: JP 2009-99652A
Patent Document 2: JP 2006-344742A
Patent Document 3: JP 2004-165593A
Patent Document 4: JP 2002-252147A
Patent Document 5: JP 2011-228320 A
Patent Document 6: US 2005/255259 A1

### DISCLOSURE OF THE INVENTION

### Problem to be Solved by the Invention

A solid electrolytic capacitor using a separator made from PET (polyethylene terephthalate) is proposed in Patent Document 1. Use of this separator allows greater capacitance, lower ESR, and higher withstand voltage, and also implementation of low cost. However, the solid electrolytic capacitor using a separator made from only synthetic staple fibers as in Patent Document 1 has problems that denseness is lacking and that reduction in short-circuit defect rate in demand recently is insufficient.

An electrolytic capacitor using a separator including fibrillated acrylic fibers is proposed in Patent Document 2. Technology providing an electrolytic capacitor that, through the use of this separator, allows improvement in short-circuit defect rate as well as a high withstand voltage under high temperature, and that has increased capacity even with the same size and improved ESR is disclosed. However, the solid electrolytic capacitor using a separator including fibrillated acrylic fibers as in Patent Document 2 has problems that denseness of the separator is too high, and that reduction in initial ESR in demand recently is insufficient.

A solid electrolytic capacitor using a separator including fibers that are made from semi-aromatic polyamide resin is proposed in Patent Document 3. Technology providing a solid electrolytic capacitor that, through use of this separator, satisfies retention of electrolyte and ESR characteristics within a high frequency area after solder reflow is disclosed. However, even the solid electrolytic capacitor using a separator having good impregnating ability as in Patent Document 3 needs further reduction in impregnating ability and reduction in short-circuit defect rate, and the separator needs further improvement in both impregnating ability and denseness.

An electrolytic capacitor using a separator having aramid fibers as a main component is proposed in Patent Document 4. Technology providing an electrolytic capacitor that, through the use of this separator, controls winding deviation of a winding type capacitor element without making the separator of the capacitor element have lower density, as well as controls interval variability between an anode lead and a cathode lead, even if heat treatment of around 150 to 300 degrees Centigrade is carried out before impregnating an electrolyte into the capacitor element is disclosed. However, even the solid electrolytic capacitor using a separator having aramid fibers as a main component as in Patent Document 4 has insufficient denseness, and thus needs reduction in short-circuit defect rate that is in demand recently.

In this manner, the conventional separator has a problem that it cannot meet the requirements of further reduction in ESR and in short-circuit defect rate, that are in demand recently.

Moreover, in recent years, further improvement in reliability of the solid electrolytic capacitor and the hybrid electrolytic capacitor is required due to expansion of the applications thereof.

For example, as described above, withstanding vibrations due to an automobile running, an engine running, etc. and there being no defects in a severely high temperature environment, such as in the surroundings of an engine room, are required of the solid electrolytic capacitor used in automobiles.

In light of these problems, the present invention aims to provide a separator that, through use in a solid electrolytic capacitor and a hybrid electrolytic capacitor, reduces initial ESR and short-circuit defect rate, as well as improves reliability of being able to endure use over a long period of time in a severe environment, and to provide a solid electrolytic capacitor and a hybrid electrolytic capacitor using the separator.

### Means of Solving the Problem

The present invention aims to resolve the above problems, and includes the following structure, for example, as means for achieving the above aim.

That is, the present invention is a separator for aluminum electrolytic capacitors interposed between paired electrodes, characterized by containing a synthetic resin fiber, and having porosity within a range of 65 to 85%, average pore size within a range of 0.5 to 25.0 µm, and Clark stiffness within a range of 1 to 10 cm³/100.

For example, it is characterized in that the synthetic resin fiber is a polyamide fiber.

As another example, it is characterized in that the synthetic resin fiber is a fibrillated fiber.

An aluminum electrolytic capacitor is characterized by using the separators described above as a separator.

For example, it is characterized by using a conductive polymer as a cathode material.

### Results of the Invention

According to the present invention, provision of the structure resolving the problems described above allows obtainment of a separator having sufficient flexibility. Use of this separator also contributes to improvement in reliability of the capacitor.

### DESCRIPTION OF EMBODIMENTS

An embodiment according to the present invention is described in detail below.

The inventors have revealed that when conducting a test for the solid electrolytic capacitor and the hybrid electrolytic capacitor through simulation of applications thereof requiring heat resistance and vibration resistance, there is a risk of resistance increasing after testing for the solid electrolytic capacitor and the hybrid electrolytic capacitor using a conventional separator, as in Patent Documents 1 to 5.

Research of the solid electrolytic capacitor and the hybrid electrolytic capacitor with increased resistance has found that the increased resistance is caused by the conductive polymers within the capacitor element collapsing and lack of continuity of the conductive polymer layer. This is thought to be caused by the conductive polymer layer that is solid being shaken by vibrations and damaged.

Based on the results given above, the bending rigidity of the separator is controlled, focusing on continuity of the conductive polymer layer of the solid electrolytic capacitor and the hybrid electrolytic capacitor.

As a result, a separator having sufficient flexibility may be obtained, and according to an aluminum electrolytic capacitor using the separator, an aluminum electrolytic capacitor having improved reliability against high temperature and vibration may be provided.

In actual manufacturing steps, a capacitor wound element made by adding a constant tension and winding at the time of reeling up is manufactured by winding the separator and an electrode foil, and then securing it using tape. Therefore, due to the fact that a constant tension is always applied on the separator and the electrode foil constituting the capacitor element, a force repelling outward from the inside of the wound element is always applied to the capacitor element.

As a result of the inventors' deliberation, in a high-temperature and high-vibration environment to which automobile electric components are exposed, there are cases where variation of shrinkage, embrittlement, etc. of material constituting the separator occurs in the high-temperature environment, and cases where variation of divergence from the normal winding state occurs in the high-vibration environment. Application of the force repelling outward from the inside of the wound element discovers that the conductive polymer layer formed in the separator or at an interface between the separator and the electrode foil is damaged, and that continuity thereof is decreased. Accordingly, by resolving this problem, it is revealed that prevention of damage of the formed conductive polymer layer and prevention of decrease in continuity thereof is possible.

It is found if the separator holding the conductive polymers works as a buffer material that releases the force repelling outward from the inside of the element even when variation in shrinkage, embrittlement, etc. of the material constituting the separator and variation of divergence from the normal winding state etc. occur, the conductive polymers formed within the separator or at the interface between the separator and the element do not collapse, and thus the continuity of the conductive polymer layer contributing to the ESR characteristics of the capacitor is maintained. Therefore, it is revealed that the separator requires sufficient flexibility, and that elasticity, that is to say, the bending rigidity of the separator is important.

By controlling the bending rigidity to be optimum, a separator having sufficient flexibility is obtained.

Moreover, since the embodiment according to the present invention controls the porosity of the separator to 65 to 85% and the average pore size of the same to 0.5 to 25.0 µm, the internal structure of the separator does not become excessively dense or sparse.

Impregnating the polymerization liquid and the dispersion liquid of the conductive polymers via the fiber structure of the separator, and then polymerizing and drying forms a conductive polymer layer on fiber surfaces. By setting the porosity and average pore size of the separator to be within the respective ranges given above, gaps between fibers within the separator may be appropriately maintained so as to continuously form conductive polymer layers that become an electronic conductive path. Therefore, a separator that contributes to reduction in initial ESR and short-circuit defect rate of the aluminum electrolytic capacitor is provided.

Moreover, continuously forming the electronic conductive path means reducing discontinuous conductive polymers that do not contribute to lowering ESR. That is, since it easier to satisfy the target initial ESR characteristics even with less conductive polymer retention, this may even contribute to reduction in man hours and use of members.

By setting porosity, average pore size, and Clark stiffness within the predetermined respective ranges, the solid electrolytic capacitor and the hybrid electrolytic capacitor using the separator of the present invention that has a homogeneous internal paper structure and sufficient flexibility not only have low initial ESR and low short-circuit defect rate, but also contribute to control of characteristic degradation and improvement in reliability of the solid electrolytic capacitor and the hybrid electrolytic capacitor even in a severe usage environment in recent demand, such as high temperature and/or high vibration.

Furthermore, making the separator described above contain polyamide fibers allows further increase in heat resistance of the separator, and further improvement in reliability of the solid electrolytic capacitor and the hybrid electrolytic capacitor using this separator.

The separator according to the embodiment of the present invention is a separator for aluminum electrolytic capacitors, which is interposed between paired electrodes. Control of porosity of the separator within a range of 65 to 85%, average pore size of the same within a range of 0.5 to 25.0 µm, and Clark stiffness of the same within a range of 1 to 10 cm³/100 gives particularly good results.

Rigidity of the separator according to the embodiment of the present invention is measured using Clark stiffness. Clark stiffness measures a backwardly bending strength of a test specimen resistible to its own weight emanating from the stiffness (rigidity) thereof.

When the Clark stiffness of the separator is high enough to exceed 10 cm³/100, which means that the separator is inflexible to bending, the force repelling outward from the inside of the wound element is too strong and the separator does not function as a buffer material, the conductive polymers collapse in a high-temperature and high-vibration environment, and continuity of the conductive polymer layers is reduced.

On the other hand, while details are uncertain when the Clark stiffness of the separator is less than 1 cm³/100, the wound element in a tense state is easily loosened, and as described above, does not function as a buffer material, the conductive polymers collapse in a high-temperature and high-vibration environment, and continuity of the conductive polymer layers is reduced.

A force repelling outward from the inside of the wound element of the capacitor due to the material itself used is always applied to the separator and the electrode foil, even if there is a difference in strength. Therefore, selection of the Clark stiffness for measuring the strength of the test specimen itself, rather than using an index of stiffness or rigidity indicating the degree of deformation caused by an external force, allows provision of an excellent separator.

Moreover, the porosity of the separator is within a range of 65 to 85%, more preferably 70 to 80%.

When the porosity is under 65%, gaps between fibers are too close, impregnating ability of the polymerization liquid or the dispersion liquid of the conductive polymers is deteriorated, and ESR of the solid electrolytic capacitor and the hybrid electrolytic capacitor cannot be reduced. Furthermore, due to the increase in apparent density of the separator, the Clark stiffness tends to increase.

If the porosity exceeds 85%, the polymerization liquid or the dispersion liquid of the conductive polymers can be sufficiently impregnated; however, as long as enough of the conductive polymer layers are formed, impregnation of excessive polymerization liquid or dispersion liquid of the conductive polymers is unnecessary since the resistance does not drop below a certain amount. Moreover, impregnation of excessive polymerization liquid or dispersion liquid of the conductive polymers leads to increase in member use, thereby increasing capacitor cost. Furthermore, if the porosity is too high, the gaps between fibers are too large, and a capillary phenomenon does not easily act at the time of impregnation, thereby lowering productivity at the time of manufacturing a capacitor. Yet even further, there are cases where a burr etc. of the electrode foil easily passes through the separator and the short-circuit defect rate becomes higher since denseness is low.

Setting of the average pore size of the separator within the range of 0.5 to 25.0 µm allows guarantee of continuity of the conductive polymer layers of the solid electrolytic capacitor and the hybrid electrolytic capacitor.

Since the separator is excessively dense when the average pore size is under 0.5 µm, it is difficult to impregnate the base material of the conductive polymers and to guarantee continuity of the conductive polymer layers, and thus the initial ESR cannot be reduced sufficiently. On the other hand, if the average pore size exceeds 25.0 µm, denseness of the separator is insufficient, making it easy for a burr etc. of the electrode foil pass through the separator, thereby not being able to reduce short circuits.

Types of fibers constituting the separator preferably includes synthetic resin fibers from the viewpoint of chemical stability, physical stability, ease of handling, etc. Even among synthetic resin fibers, polyaramid fibers, or more specifically aramid fibers are favorable when taking requirement of high heat resistance into account. Moreover, taking demand for short circuit resistance into account, use of fibrillated fibers is favorable, and as long as the porosity, average pore size, and Clark stiffness of the separator are satisfied, a binder effect of the synthetic resin fibers is not particularly required.

Furthermore, the fiber length of the fibrillated fibers to be used can be arbitrarily set when taking porosity, average pore size, and Clark stiffness of the separator into consideration, while porosity, average pore size, and Clark stiffness of the separator are easily set within favorable ranges, as long as 30% or greater by mass of fibers, which have the length-weighted average fiber length falling within a range of 0.3 to 1.0 mm and the content rate of 0.1 to 1.2 mm long fibers being 80% or greater, are included. The separator using the fibrillated fibers within the ranges given above may improve short circuit resistance without making the separator overly densified.

Yet furthermore, wet, heat fusing resin, such as a polyvinyl alcohol fiber, or a paper strengthening agent, such as polyacrylamide, may be used as a binder material, taking into consideration necessity when forming a separator as well as mechanical strength when handling. While the content of the binder material is not particularly limited as long as desired porosity, average pore size, and Clark stiffness of the separator are satisfied, the impregnating ability of a polymerization liquid or a dispersion liquid of the conductive polymers is not easily affected as long as the content is only up to 30% by weight.

A sheet-like separator has a tendency that the thicker it becomes, the higher the bending rigidity, and the thinner it becomes, the lower the rigidity. Therefore, thickness of the separator according to the embodiment of the present invention is preferably within a range of 20 to 70 µm. However, setting the thickness arbitrarily is possible as long as it is within a range allowing a desired Clark stiffening.

With the embodiment of the present invention, density of the separator may be set arbitrarily when taking porosity, average pore size, and Clark stiffness of the separator into account. In general, as long as the density is approximately 0.20 to 0.50 g/cm³, porosity, average pore size, and Clark stiffness of the separator are easily set within favorable ranges.

With the embodiment of the present invention, a wetlaid nonwovens formed using a paper making method is adopted as the separator. The paper making format of the separator is not particularly limited as long as porosity, average pore size, and Clark stiffness are satisfied, wherein paper making formats of Fourdrinier paper making, tanmo paper making, and cylinder paper making are available. A plurality of layers formed using these paper making methods may be superimposed. Alternatively, when making paper, as long as the impurity content is an amount not adversely affecting the separator for capacitors, an additive, such as a dispersing agent, an antifoaming agent, or a paper strength additive, may be added, and conversion, such as paper strengthening, lyophilization, calendering, and/or embossing, may be carried out after paper layer formation.

However, the wetlaid nonwovens made using a paper making method is not limiting in any way, and use of a film forming method, such as film forming by casting a fiber dispersion liquid, is also possible.

The aluminum electrolytic capacitor of the embodiment uses the separator having the structure described above, interposes the separator between paired electrodes, and uses conductive polymers as a cathode material.

The solid electrolytic capacitor and the hybrid electrolytic capacitor using the separator according to the embodiment of the present invention that adopts the structure described above allow sufficient impregnation of the conductive polymers, have high continuity of conductive polymer layers, and maintain continuity of the conductive polymer layers even in a high-temperature and high-vibration environment. That is, a capacitor not only having favorable initial characteristics but also having high reliability, such as ability of maintaining initial characteristics even in a severe environment, may be provided.

### [Separator properties measurement methods]

Specific measurements of each property of the separator according to the embodiment are carried out under the following conditions using the following methods.

### [Thickness]

Thickness of separators is measured using a method of folding ten pieces of paper according to '5.1.3 Case of folding paper and measuring thickness' with the micrometer of 'a) Case of using an external micrometer' in '5.1.1 Measuring device and measuring method' stipulated in JIS C2300-2 "Cellulosic papers for electrical purposes-Part 2: Methods of test- 5.1 Thickness".

### [Density]

Density of a separator in a bone-dry state is measured using a method stipulated in method B of JIS C2300-2 "Cellulosic papers for electrical purposes-Part 2: Methods of test- 7.0A Density".

### [Porosity]

Porosity of the separator is found using the following Equation 1. (True specific gravity of separator - separator density)/True specific gravity of separator × 100 (%)

For example, porosity of a separator made of only cellulose having a density of 0.4 g/cm³ is found in the following manner.

In this embodiment, the true specific gravity of cellulose is 1.5, and is plugged into the above Equation 1 to give (1.5 - 0.4) / 1.5 × 100 = 73.3 (%).

As another example, specific gravity of a separator having a density of 0.45 g/cm³ and made of 30% by mass synthetic fibers having a specific gravity of 1.2 and 70% by mass cellulose fibers having a specific gravity of 1.5 is 1.5 × 0.7 + 1.2 × 0.3 = 1.41. Plugging this result into the above Equation 1 gives (1.41 - 0.45) / 1.41 × 100 = 68.1 (%) for the porosity of the separator.

### [Average Pore Size]

Average pore size (µm) of the separator is found from pore size distribution that is measured using bubble point methods (ASTM F316-86 and JIS K3832) with the CFP-1200-AEXL-ESA (manufactured by Porous Materials Inc.) Note that GALWICK (manufactured by Porous Materials Inc.) is used as a test liquid.

### [Clark Stiffness]

Clark stiffness of the separator is measured using a method stipulated in JIS P 8143 'Paper-Determination of stiffness-Clark stiffness tester method'. Test specimens have a length of 250 mm and a width of 30 mm where the long side is defined extending in the machine direction (MD) of the separator.

### [Length-weighted average fiber length and content rate of fibers 0.1 to 1.2 mm in length]

Length-weighted average fiber length and content rate of fibers 0.1 to 1.2 mm in length are found in the following manner: the length-weighted average fiber length is measured with the device disclosed in JIS P 8226-2 'Pulps-Determination of Fibre length by automated optical analysis-Part2: Unpolarized light method', wherein the device is kajaaniFiberLab (manufactured by Metso Automation) in this case, and the content rate is calculated from a length-weighted average fiber length distribution within a range of 0.05 to 7.6 mm.

### [Manufacturing steps for solid electrolytic capacitor]

Two kinds of solid electrolytic capacitors using separators of respective working examples, comparative examples and conventional examples given below are manufactured, wherein one kind has a rated voltage of 35V, a capacitance of 100 pF, a diameter of 10.0 mm and a height of 10.0 mm, and the other kind has a rated voltage of 80V, a capacitance of 47 pF, a diameter of 10.0 mm and a height of 10.0 mm.

A specific manufacturing method is as described below.

An anode foil and a cathode foil having undergone etching and oxide film formation have a separator interposed therebetween so that they do not touch each other, and they are wound and then fixed using tape, thereby manufacturing a capacitor element. The manufactured capacitor element undergoes re-forming treatment and is then dried.

In the case of the solid electrolytic capacitor having a rated voltage of 35V, a conductive polymer polymerization liquid is impregnated into the capacitor element, it is then heated and polymerized, and the solvent is dried, forming a conductive polymer. In the case of the solid electrolytic capacitor having a rated voltage of 80V, a conductive polymer dispersion liquid is impregnated into the capacitor element, and it is then heated and dried, forming a conductive polymer.

Next, the capacitor elements are placed in predetermined cases, opening parts are sealed, and aging is conducted so as to obtain respective solid electrolytic capacitors.

### [Manufacturing steps for hybrid electrolytic capacitor]

Two kinds of hybrid electrolytic capacitors using separators of respective working examples, comparative examples and conventional examples given below are manufactured, wherein one kind has a rated voltage of 35V, a capacitance of 270 pF, a diameter of 10.0 mm and a height of 10.5 mm, and the other kind has a rated voltage of 125V, a capacitance of 10 pF, a diameter of 10.0 mm and a height of 10.5 mm.

A specific manufacturing method is as follows.

An anode foil and a cathode foil having undergone etching and oxide film formation have a separator interposed therebetween so that they do not touch each other, and they are wound and then fixed using tape, thereby manufacturing a capacitor element. The manufactured capacitor element undergoes re-forming treatment and is then dried.

In the case of the hybrid electrolytic capacitor having a rated voltage of 35V, a conductive polymer polymerization liquid is impregnated into the capacitor element, it is then heated and polymerized, and the solvent is dried, forming a conductive polymer. In the case of the hybrid electrolytic capacitor having a rated voltage of 125V, a conductive polymer dispersion liquid is impregnated into the capacitor element, and it is then heated and dried, forming a conductive polymer.

Next, an electrolyte for driving is impregnated into the capacitor elements, the capacitor elements are placed in predetermined cases, opening parts are sealed, and aging is conducted, thereby obtaining respective hybrid electrolytic capacitors.

### [Evaluation method for aluminum electrolytic capacitor]

Specific performance evaluation of the aluminum electrolytic capacitor according to the embodiment is conducted under the following conditions using the following methods.

### [Initial ESR]

ESR of a manufactured capacitor element is measured with an LCR meter under conditions of a temperature of 20 degrees Centigrade and frequency of 100 kHz.

### [Short-circuit defect rate]

Short-circuit defect rate is measured using a wound capacitor element by counting short circuit defects occurring during aging, dividing the number of the elements having a short circuit defect by the number of the capacitor elements that have undergone aging, and expressing it as a short circuit defect rate.

### [ESR increase rate after high temperature load test]

ESR after high temperature load test is measured with an LCR meter under conditions of a temperature of 20 degrees Centigrade and frequency of 100 kHz after heat treatment at 150 degrees Centigrade for 500 hours is carried out.

This ESR after high temperature load test is divided by ESR before high temperature load test so as to calculate an ESR increase rate after high temperature load test.

### [ESR increase rate after vibration test]

Referencing JIS C 60068-2-6 4.17 'Environmental testing-Part 2-6 : Tests-Test Fc: Vibration (sinusoidal)', ESR after vibration test is measured with an LCR meter under conditions of a temperature of 20 degrees Centigrade and frequency of 100 kHz, after a vibration test is carried out for a total of six hours: two hours for each of three directions in which vibration directions are perpendicular, at a frequency of 10 to 2000 Hz and total amplitude of 1.5 mm.

This ESR after vibration test is divided by the ESR before vibration test so as to calculate an ESR increase rate after high vibration test.

### [Working Examples]

Specific working examples etc. of the separator of the embodiment according to the present invention are described below.

### [Working Example 1]

Cylinder paper making is carried out using a mixed raw material of 60% by mass fibrillated aramid fibers, 25% by mass fibrillated polyarylate fibers, and 15% by mass polyvinyl alcohol so as to obtain a separator of Working Example 1.

Thickness of the completed separator of Working Example 1 is 60 µm, density is 0.200 g/cm³, porosity is 85.0%, average pore size is 12.0 µm, and Clark stiffness is 2.0 cm³/100.

### [Working Example 2]

Cylinder paper making is carried out using a mixed raw material of 70% by mass fibrillated aramid fibers, 20% by mass fibrillated polyamide-imide fibers, and 10% by mass polyacrylamide so as to obtain a separator of Working Example 2.

Thickness of the completed separator of Working Example 2 is 40 µm, density is 0.484 g/cm³, porosity is 65.0%, average pore size is 10.0 µm, and Clark stiffness is 8.0 cm³/100.

### [Working Example 3]

Cylinder paper making is carried out using a mixed raw material of 40% by mass fibrillated aramid fibers, 35% by mass fibrillated poly-p-phenylene benzoxazole fibers, and 25% by mass polyvinyl alcohol so as to obtain a separator of Working Example 3.

Thickness of the completed separator of Working Example 3 is 35 µm, density is 0.284 g/cm³, porosity is 80.0%, average pore size is 17.0 µm, and Clark stiffness is 4.0 cm³/100.

### [Working Example 4]

Cylinder paper making is carried out using a raw material of 100% by mass fibrillated aramid fibers so as to obtain a separator of Working Example 4.

Thickness of the completed separator of Working Example 4 is 30 µm, density is 0.420 g/cm³, porosity is 70.0%, average pore size is 8.0 µm, and Clark stiffness is 7.5 cm³/100.

### [Working Example 5]

Cylinder paper making is carried out using a mixed raw material of 40% by mass fibrillated aramid fibers and 60% by mass fibrillated acrylic fibers so as to obtain a separator of Working Example 5.

Thickness of the completed separator of Working Example 5 is 50 µm, density is 0.215 g/cm³, porosity is 83.0%, average pore size is 25.0 µm, and Clark stiffness is 9.0 cm³/100.

### [Working Example 6]

Cylinder paper making is carried out using a mixed raw material of 85% by mass fibrillated aramid fibers and 15% by mass polyacrylamide so as to obtain a separator of Working Example 6.

Thickness of the completed separator of Working Example 6 is 45 µm, density is 0.405 g/cm³, porosity is 70.4%, average pore size is 0.5 µm, and Clark stiffness is 5.0 cm³/100.

### [Working Example 7]

Cylinder paper making is carried out using a mixed raw material of 40% by mass fibrillated aramid fibers, 40% by mass fibrillated acrylic fibers, and 20% by mass polyvinyl alcohol so as to obtain a separator of Working Example 7.

Thickness of the completed separator of Working Example 7 is 70 µm, density is 0.378 g/cm³, porosity is 70.6%, average pore size is 20.0 µm, and Clark stiffness is 10.0 cm³/100.

### [Working Example 8]

Cylinder paper making is carried out using a mixed raw material of 50% by mass fibrillated aramid fibers, 45% by mass fibrillated cellulose fibers, and 5% by mass polyvinyl alcohol so as to obtain a separator of Working Example 8.

Thickness of the completed separator of Working Example 8 is 20 µm, density is 0.269 g/cm³, porosity is 81.3%, average pore size is 12.0 µm, and Clark stiffness is 1.0 cm³/100.

### [Working Example 9]

Cylinder paper making is carried out using a mixed raw material of 30% by mass fibrillated aramid fibers and 70% by mass fibrillated cellulose fibers so as to obtain a separator of Working Example 9.

Thickness of the completed separator of Working Example 9 is 40 µm, density is 0.354 g/cm³, porosity is 75.9%, average pore size is 5.0 µm, and Clark stiffness is 7.0 cm³/100.

### [Working Example 10]

Cylinder paper making is carried out using a mixed raw material of 70% by mass fibrillated aramid fibers and 30% by mass polyvinyl alcohol so as to obtain a separator of Working Example 10.

Thickness of the completed separator of Working Example 10 is 30 µm, density is 0.304 g/cm³, porosity is 77.6%, average pore size is 2.0 µm, and Clark stiffness is 1.5 cm³/100.

### [Reference Example]

Cylinder paper making is carried out using a mixed raw material of 65% by mass fibrillated aramid fibers and 35% by mass polyvinyl alcohol so as to obtain a separator of Reference Example.

Thickness of the completed separator of Reference Example is 30 µm, density is 0.325 g/cm³, porosity is 75.9%, average pore size is 1.8 µm, and Clark stiffness is 2.0 cm³/100.

### [Comparative Example 1]

Cylinder paper making is carried out using a mixed raw material of 50% by mass fibrillated aramid fibers, 45% by mass fibrillated cellulose fibers, and 5% by mass polyvinyl alcohol so as to obtain a separator of Comparative Example 1.

Thickness of the completed separator of Comparative Example 1 is 50 µm, density is 0.246 g/cm³, porosity is 82.9%, average pore size is 30.0 µm, and Clark stiffness is 5.0 cm³/100.

### [Comparative Example 2]

Cylinder paper making is carried out using a mixed raw material of 85% by mass fibrillated aramid fibers and 15% by mass polyacrylamide so as to obtain a separator of Comparative Example 2.

Thickness of the completed separator of Comparative Example 2 is 15 µm, density is 0.303 g/cm³, porosity is 78.0%, average pore size is 0.1 µm, and Clark stiffness is 0.5 cm³/100.

### [Comparative Example 3]

Cylinder paper making is carried out using a mixed raw material of 20% by mass fibrillated aramid fibers and 80% by mass fibrillated cellulose fibers so as to obtain a separator of Comparative Example 3.

Thickness of the completed separator of Comparative Example 3 is 75 µm, density is 0.421 g/cm³, porosity is 71.6%, average pore size is 22.0 µm, and Clark stiffness is 15.0 cm³/100.

### [Conventional Example 1]

A separator made by the same method as described in Working Example 1 of Patent Document 1 is manufactured, making it a separator of Conventional Example 1.

The separator of Conventional Example 1 is made up of 100% by mass polyethylene terephthalate fibers, having a thickness of 40 µm, density of 0.450 g/cm³, porosity of 67.4%, average pore size of 27.0 µm, and Clark stiffness of 0.8 cm³/100.

### [Conventional Example 2]

A separator made by the same method as described in Working Example 1 of Patent Document 2 is manufactured, making it a separator of Conventional Example 2.

The separator of Conventional Example 2 contains 90% by mass fibrillated acrylic fibers and 10% by mass homoacrylic fibers, having a thickness of 40 µm, density of 0.550 g/cm³, porosity of 53.4%, average pore size of 3.0 µm, and Clark stiffness of 11.0 cm³/100.

### [Conventional Example 3]

A separator made by the same method as described in Working Example 1 of Patent Document 3 is manufactured, making it a separator of Conventional Example 3.

The separator of Conventional Example 3 contains 70% by mass nylon 9MT fibers and 30% by mass polyvinyl alcohol, having a thickness of 40 µm, density of 0.273 g/cm³, porosity of 79.7%, average pore size of 26.0 µm, and Clark stiffness of 13.0 cm³/100.

### [Conventional Example 4]

A separator made by the same method as described in Working Example 1 of Patent Document 4 is manufactured, making it a separator of Conventional Example 4.

The separator of Conventional Example 4 is made up of 100% by mass aramid fibers, having a thickness of 40 µm, density of 0.180 g/cm³, porosity of 87.1%, average pore size of 18.0 µm, and Clark stiffness of 14.0 cm³/100.

The raw materials and compositions of the separators of Working Examples 1 to 10, Reference Example, Comparative Examples 1 to 3, and Conventional Examples 1 to 4 described above are given in Table 1, and evaluation results of each individual separator are given in Table 2.

Table 1 shows composition examples of raw materials for the respective separators of Working Examples 1 to 10, Reference Example, Comparative Examples 1 to 3, and Conventional Examples 1 to 4 described above.

**[Table 1]**

| | Separator material | | | | | | | |
|---|---|---|---|---|---|---|---|---|
| | Fiber material | Length-weighted average fiber length(mm) | Mass % | Fiber material | Length-weighted average fiber length(mm) | Mass % | Binder material | Mass % |
| | | Content rate of fibers 0.1 to 1.2 mm in length(%) | | | Content rate of fibers 0.1 to 1.2 mm in length(%) | | | |
| Working Example 1 | Fibrillated aramid | 0.6 | 60 | Fibrillated polyarylate | 1.3 | 25 | Polyvinyl alcohol | 15 |
| | | 84 | | | 80 | | | |
| Working Example 2 | Fibrillated aramid | 0.5 | 70 | Fibrillated polyamide-imide | 0.8 | 20 | Polyacrylamide | 10 |
| | | 86 | | | 70 | | | |
| Working Example 3 | Fibrillated aramid | 0.7 | 40 | Fibrillated poly-p-phenylene benzoxazole | 0.7 | 35 | Polyvinyl alcohol | 25 |
| | | 81 | | | 65 | | | |
| Working Example 4 | Fibrillated aramid | 0.3 | 100 | - | - | - | - | - |
| | | 85 | | | - | | | |
| Working Example 5 | Fibrillated aramid | 1.0 | 40 | Fibrillated acrylic | 1.5 | 60 | - | - |
| | | 81 | | | 40 | | | |
| Working Example 6 | Fibrillated aramid | 0.4 | 85 | - | - | - | Polyacrylamide | 15 |
| | | 87 | | | - | | | |
| Working Example 7 | Fibrillated aramid | 0.9 | 40 | Fibrillated acrylic | 1.5 | 40 | Polyviny alcohol | 20 |
| | | 80 | | | 40 | | | |
| Working Example 8 | Fibrillated aramid | 0.4 | 50 | Fibrillated cellulose | 1.5 | 45 | Polyvinyl alcohol | 5 |
| | | 85 | | | 50 | | | |
| Working Example 9 | Fibrillated aramid | 0.5 | 30 | Fibrillated cellulose | 1.0 | 70 | - | - |
| | | 90 | | | 75 | | | |
| Working Example 10 | Fibrillated aramid | 0.5 | 70 | - | - | - | Polyvinyl alcohol | 30 |
| | | 85 | | | - | | | |
| Reference Example | Fibrillated aramid | 0.5 | 65 | - | - | - | Polyvinyl alcohol | 35 |
| | | 85.0 | | | | | | |
| Comparative Example 1 Comparative | Fibrillated aramid | 1.5 | 50 | | - | | | |
| | | | | Fibrillated cellulose | 1.5 | 45 | Polyvinyl alcohol | 5 |
| | | 20 | | | 50 | | | |
| Comparative Example 2 | Fibrillated aramid | 0.10 | 85 | - | - | - | Polyacrylamide | 15 |
| | | 95 | | | - | | | |
| Comparative Example 3 | Fibrillated aramid | 0.50 | 20 | Fibrillated cellulose | 1.0 | 80 | - | - |
| | | 90 | | | 75 | | | |
| Conventional Example 1 | Polyethylene terephthalate | 3.0 | 100 | - | - | - | - | - |
| | | 0 | | | - | | | |
| Conventional Example 2 | Fibrillated acrylic | 1.5 | 90 | Homo-acrylic | 3.0 | 10 | - | - |
| | | 40 | | | 0 | | | |
| Conventional Example 3 | Nylon 9MT | 3.0 | 70 | - | - | - | Polyvinyl alcohol | 30 |
| | | 0 | | | - | | | |
| Conventional Example 4 | Aramid | 3.0 | 100 | - | - | - | - | - |
| | | 0 | | | - | | | |

Table 2 gives evaluation results pf the respective separators of Working Examples 1 to 10, Reference Example, Comparative Exaples 1 to 3, and Conventional Examples 1 to 4 described above.

| | Separator properties | | | | |
|---|---|---|---|---|---|
| | Thickness | Density | Porosity | Average pore size | Clark stiffness |
| | µm | g/cm³ | % | µm | cm³/100 |
| Working Example 1 | 60 | 0.200 | 85.0 | 12.0 | 2.0 |
| Working Example 2 | 40 | 0.484 | 65.0 | 10.0 | 8.0 |
| Working Example 3 | 35 | 0.284 | 80.0 | 17.0 | 4.0 |
| Working Example 4 | 30 | 0.420 | 70.0 | 8.0 | 7.5 |
| Working Example 5 | 50 | 0.215 | 83.0 | 25.0 | 9.0 |
| Working Example 6 | 45 | 0.405 | 70.4 | 0.5 | 5.0 |
| Working Example 7 | 70 | 0.378 | 70.6 | 20.0 | 10.0 |
| Working Example 8 | 20 | 0.269 | 81.3 | 12.0 | 1.0 |
| Working Example 9 | 40 | 0.354 | 75.9 | 5.0 | 7.0 |
| Working Example 10 | 30 | 0.304 | 77.6 | 2.0 | 1.5 |
| Reference Example | 30 | 0.325 | 75.9 | 1.8 | 2.0 |
| Comparative Example 1 | 50 | 0.246 | 82.9 | 30.0 | 5.0 |
| Comparative Example 2 | 15 | 0.303 | 78.0 | 0.1 | 0.5 |
| Comparative Example 3 | 75 | 0.421 | 71.6 | 22.0 | 15.0 |
| Conventional Example 1 | 40 | 0.450 | 67.4 | 27.0 | 0.8 |
| Conventional Example 2 | 40 | 0.550 | 53.4 | 3.0 | 11.0 |
| Conventional Example 3 | 40 | 0.273 | 79.7 | 26.0 | 13.0 |
| Conventional Example 4 | 40 | 0.180 | 87.1 | 18.0 | 14.0 |

The aluminium electrolytic capacitors manufactured using the separators of the respective working examples, reference example, comparative examples and conventional examples include solid electrolytic capacitors having a rated voltage of 35V for a low voltage and solid electrolytic capacitors having a rated voltage of 80V for a high voltage.

Moreover, capacitors having a rated voltage of 35V for a low voltage and capacitors having a rated voltage of 125V for a high voltage are manufactured as the hybrid electrolytic capacitors.

Table 3 gives performance evaluation results of the solid electrolytic capacitors using the respective separators described above, and Table 4 gives performance evaluation results of the hybrid electrolytic capacitors using the respective separators described above.

Table 3 gives performance evaluation results of the solid electrolytic capacitors using the respective separators of Working Examples 1 to 10, Reference Example, Comparative Examples 1 to 3, and Conventional Examples 1 to 4.

**[Table 3]**

| | Solid electrolytic capacitor | | | | | | | |
|---|---|---|---|---|---|---|---|---|
| | Rated voltage 35V | | | | Rated voltage 80V | | | |
| | Initial ESR | Short circuit defect rate | ESR increase rate after high temperature load test | ESR increase rate after vibration test | Initial ESR | Short circuit defect rate | ESR increase rate after high temperature load test | ESR increase rate after vibration test |
| | mΩ | % | % | % | mΩ | mΩ | % | % |
| Working Example 1 | 22 | 0.0 | 3.3 | 1.7 | 44 | 0.0 | 3.8 | 1.8 |
| Working Example 2 | 23 | 0.0 | 2.1 | 4.4 | 45 | 0.0 | 3.1 | 3.6 |
| Working Example 3 | 19 | 0.0 | 4.0 | 1.5 | 40 | 0.0 | 2.4 | 1.3 |
| Working Example 4 | 20 | 0.0 | 2.8 | 2.0 | 39 | 0.0 | 2.6 | 1.2 |
| Working Example 5 | 22 | 0.0 | 3.7 | 4.9 | 44 | 0.0 | 2.1 | 4.3 |
| Working Example 6 | 20 | 0.0 | 2.6 | 1.6 | 40 | 0.0 | 3.8 | 1.5 |
| Working Example 7 | 19 | 0.0 | 3.6 | 4.6 | 40 | 0.0 | 3.8 | 4.3 |
| Working Example 8 | 22 | 0.0 | 2.3 | 3.4 | 44 | 0.0 | 2.8 | 3.8 |
| Working Example 9 | 19 | 0.0 | 3.1 | 1.8 | 39 | 0.0 | 3.8 | 2.0 |
| Working Example 10 | 19 | 0.0 | 3.5 | 1.5 | 39 | 0.0 | 2.0 | 1.6 |
| Reference Example | 25 | 0.0 | 3.3 | 1.3 | 48 | 0.0 | 3.9 | 1.9 |
| Comparative Example 1 | 23 | 1.0 | 3.7 | 1.4 | 45 | 1.2 | 3.7 | 1.5 |
| Comparative Example 2 | 28 | 0.0 | 2.4 | 15.0 | 52 | 0.0 | 2.1 | 18.1 |
| Comparative Example 3 | 20 | 0.0 | 3.9 | 15.7 | 40 | 0.0 | 2.1 | 16.2 |
| Conventional Example 1 | 20 | 1.1 | 17.0 | 15.3 | 40 | 1.1 | 23.2 | 15.7 |
| Conventional Example 2 | 28 | 0.0 | 15.6 | 14.5 | 53 | 0.0 | 19.4 | 16.2 |
| Conventional Example 3 | 25 | 0.5 | 10.3 | 14.4 | 48 | 0.5 | 10.5 | 19.2 |
| Conventional Example 4 | 20 | 1.2 | 2.3 | 19.3 | 40 | 1.1 | 3.6 | 15.1 |

Table 4 gives performance evaluation results of the hybrid electrolytic capacitors using the respective separators of Working Examples 1 to 10, Reference Example. Comparative Examples 1 to 3, and Conventional Examples 1 to 4.

| | Hybrid electrolytic capacitor | | | | | | | |
|---|---|---|---|---|---|---|---|---|
| | Rated voltage 35V | | | | Rated voltage 125V | | | |
| | Initial ESR | Short circuit defect rate | ESR increase rate after high temperature load test | ESR increase rate after vibration test | Initial ESR | Short circuit defect rate | ESR increase rate after high temperature load test | ESR increase rate after vibration test |
| | mΩ | % | % | % | mΩ | mΩ | % | % |
| Working Example 1 | 23 | 0.0 | 4.0 | 1.5 | 88 | 0.0 | 3.2 | 1.2 |
| Working Example 2 | 23 | 0.0 | 2.0 | 3.1 | 87 | 0.0 | 3.0 | 4.3 |
| Working Example 3 | 20 | 0.0 | 2.8 | 1.8 | 80 | 0.0 | 3.5 | 1.1 |
| Working Example 4 | 20 | 0.0 | 2.6 | 1.4 | 79 | 0.0 | 2.8 | 1.4 |
| Working Example 5 | 22 | 0.0 | 3.3 | 4.1 | 87 | 0.0 | 3.0 | 4.3 |
| Working Example 6 | 19 | 0.0 | 3.5 | 1.5 | 80 | 0.0 | 3.1 | 1.6 |
| Working Example 7 | 20 | 0.0 | 2.9 | 4.5 | 79 | 0.0 | 3.2 | 4.2 |
| Working Example 8 | 22 | 0.0 | 2.8 | 3.5 | 87 | 0.0 | 3.9 | 4.2 |
| Working Example 9 | 19 | 0.0 | 2.6 | 1.0 | 79 | 0.0 | 3.1 | 1.9 |
| Working Example 10 | 19 | 0.0 | 2.4 | 1.5 | 79 | 0.0 | 2.1 | 1.0 |
| Reference Example | 26 | 0.0 | 3.5 | 1.1 | 95 | 0.0 | 2.5 | 1.8 |
| Comparative Example 1 | 23 | 1.1 | 3.8 | 1.1 | 88 | 1.0 | 2.1 | 1.9 |
| Comparative Example 2 | 29 | 0.0 | 3.6 | 23.7 | 104 | 0.0 | 3.6 | 16.1 |
| Comparative Example 3 | 20 | 0.0 | 3.4 | 22.4 | 80 | 0.0 | 3.8 | 23.9 |
| Conventional Example 1 | 20 | 1.0 | 17.2 | 20.6 | 80 | 1.2 | 23.3 | 20.3 |
| Conventional Example 2 | 28 | 0.0 | 23.9 | 17.4 | 105 | 0.0 | 20.8 | 19.3 |
| Conventional Example 3 | 26 | 0.5 | 10.8 | 15.2 | 96 | 0.5 | 10.6 | 17.0 |
| Conventional Example 4 | 20 | 1.2 | 3.4 | 20.1 | 80 | 1.0 | 3.7 | 15.7 |

Evaluation results of the electrolytic capacitors using the separators of the respective working examples, reference example, comparative examples, and conventional examples are described in detail next.

### [Electrolytic capacitors using separator of Working Example 1]

### <Solid electrolytic capacitors>

The solid electrolytic capacitor having a rated voltage of 35V has an initial ESR of 22 mΩ, a short circuit defect rate of 0.0%, an ESR change rate after high temperature load test of 3.3%, and an ESR change rate after vibration test of 1.7%.

The solid electrolytic capacitor having a rated voltage of 80V has an initial ESR of 44 mΩ, a short circuit defect rate of 0.0%, an ESR change rate after high temperature load test of 3.8%, and an ESR change rate after vibration test of 1.8%.

### <Hybrid electrolytic capacitors>

The hybrid electrolytic capacitor having a rated voltage of 35V has an initial ESR of 23 mΩ, a short circuit defect rate of 0.0%, an ESR change rate after high temperature load test of 4.0%, and an ESR change rate after vibration test of 1.5%.

The hybrid electrolytic capacitor having a rated voltage of 125V has an initial ESR of 88 mΩ, a short circuit defect rate of 0.0%, an ESR change rate after high temperature load test of 3.2%, and an ESR change rate after vibration test of 1.2%.

### [Electrolytic capacitors using separator of Working Example 2]

### <Solid electrolytic capacitors>

The solid electrolytic capacitor having a rated voltage of 35V has an initial ESR of 23 mΩ, a short circuit defect rate of 0.0%, an ESR change rate after high temperature load test of 2.1%, and an ESR change rate after vibration test of 4.4%.

The solid electrolytic capacitor having a rated voltage of 80V has an initial ESR of 45 mΩ, a short circuit defect rate of 0.0%, an ESR change rate after high temperature load test of 3.1%, and an ESR change rate after vibration test of 3.6%.

### <Hybrid electrolytic capacitors>

The hybrid electrolytic capacitor having a rated voltage of 35V has an initial ESR of 23 mΩ, a short circuit defect rate of 0.0%, an ESR change rate after high temperature load test of 2.0%, and an ESR change rate after vibration test of 3.1%.

The hybrid electrolytic capacitor having a rated voltage of 125V has an initial ESR of 87 mΩ, a short circuit defect rate of 0.0%, an ESR change rate after high temperature load test of 3.0%, and an ESR change rate after vibration test of 4.3%.

### [Electrolytic capacitors using separator of Working Example 3]

### <Solid electrolytic capacitors>

The solid electrolytic capacitor having a rated voltage of 35V has an initial ESR of 19 mΩ, a short circuit defect rate of 0.0%, an ESR change rate after high temperature load test of 4.0%, and an ESR change rate after vibration test of 1.5%.

The solid electrolytic capacitor having a rated voltage of 80V has an initial ESR of 40 mΩ, a short circuit defect rate of 0.0%, an ESR change rate after high temperature load test of 2.4%, and an ESR change rate after vibration test of 1.3%.

### <Hybrid electrolytic capacitors>

The hybrid electrolytic capacitor having a rated voltage of 35V has an initial ESR of 20 mΩ, a short circuit defect rate of 0.0%, an ESR change rate after high temperature load test of 2.8%, and an ESR change rate after vibration test of 1.8%.

The hybrid electrolytic capacitor having a rated voltage of 125V has an initial ESR of 80 mΩ, a short circuit defect rate of 0.0%, an ESR change rate after high temperature load test of 3.5%, and an ESR change rate after vibration test of 1.1%.

### [Electrolytic capacitors using separator of Working Example 4]

### <Solid electrolytic capacitors>

The solid electrolytic capacitor having a rated voltage of 35V has an initial ESR of 20 mΩ, a short circuit defect rate of 0.0%, an ESR change rate after high temperature load test of 2.8%, and an ESR change rate after vibration test of 2.0%.

The solid electrolytic capacitor having a rated voltage of 80V has an initial ESR of 39 mΩ, a short circuit defect rate of 0.0%, an ESR change rate after high temperature load test of 2.6%, and an ESR change rate after vibration test of 1.2%.

### <Hybrid electrolytic capacitors>

The hybrid electrolytic capacitor having a rated voltage of 35V has an initial ESR of 20 mΩ, a short circuit defect rate of 0.0%, an ESR change rate after high temperature load test of 2.6%, and an ESR change rate after vibration test of 1.4%.

The hybrid electrolytic capacitor having a rated voltage of 125V has an initial ESR of 79 mΩ, a short circuit defect rate of 0.0%, an ESR change rate after high temperature load test of 2.8%, and an ESR change rate after vibration test of 1.4%.

### [Electrolytic capacitors using separator of Working Example 5]

### <Solid electrolytic capacitors>

The solid electrolytic capacitor having a rated voltage of 35V has an initial ESR of 22 mΩ, a short circuit defect rate of 0.0%, an ESR change rate after high temperature load test of 3.7%, and an ESR change rate after vibration test of 4.9%.

The solid electrolytic capacitor having a rated voltage of 80V has an initial ESR of 44 mΩ, a short circuit defect rate of 0.0%, an ESR change rate after high temperature load test of 2.1%, and an ESR change rate after vibration test of 4.3%.

### <Hybrid electrolytic capacitors>

The hybrid electrolytic capacitor having a rated voltage of 35V has an initial ESR of 22 mΩ, a short circuit defect rate of 0.0%, an ESR change rate after high temperature load test of 3.3%, and an ESR change rate after vibration test of 4.1%.

The hybrid electrolytic capacitor having a rated voltage of 125V has an initial ESR of 87 mΩ, a short circuit defect rate of 0.0%, an ESR change rate after high temperature load test of 3.0%, and an ESR change rate after vibration test of 4.3%.

### [Electrolytic capacitors using separator of Working Example 6]

### <Solid electrolytic capacitors>

The solid electrolytic capacitor having a rated voltage of 35V has an initial ESR of 20 mΩ, a short circuit defect rate of 0.0%, an ESR change rate after high temperature load test of 2.6%, and an ESR change rate after vibration test of 1.6%.

The solid electrolytic capacitor having a rated voltage of 80V has an initial ESR of 40 mΩ, a short circuit defect rate of 0.0%, an ESR change rate after high temperature load test of 3.8%, and an ESR change rate after vibration test of 1.5%.

### <Hybrid electrolytic capacitors>

The hybrid electrolytic capacitor having a rated voltage of 35V has an initial ESR of 19 mΩ, a short circuit defect rate of 0.0%, an ESR change rate after high temperature load test of 3.5%, and an ESR change rate after vibration test of 1.5%.

The hybrid electrolytic capacitor having a rated voltage of 125V has an initial ESR of 80 mΩ, a short circuit defect rate of 0.0%, an ESR change rate after high temperature load test of 3.1%, and an ESR change rate after vibration test of 1.6%.

### [Electrolytic capacitors using separator of Working Example 7]

### <Solid electrolytic capacitors>

The solid electrolytic capacitor having a rated voltage of 35V has an initial ESR of 19 mΩ, a short circuit defect rate of 0.0%, an ESR change rate after high temperature load test of 3.6%, and an ESR change rate after vibration test of 4.6%.

The solid electrolytic capacitor having a rated voltage of 80V has an initial ESR of 40 mΩ, a short circuit defect rate of 0.0%, an ESR change rate after high temperature load test of 3.8%, and an ESR change rate after vibration test of 4.3%.

### <Hybrid electrolytic capacitors>

The hybrid electrolytic capacitor having a rated voltage of 35V has an initial ESR of 20 mΩ, a short circuit defect rate of 0.0%, an ESR change rate after high temperature load test of 2.9%, and an ESR change rate after vibration test of 4.5%.

The hybrid electrolytic capacitor having a rated voltage of 125V has an initial ESR of 79 mΩ, a short circuit defect rate of 0.0%, an ESR change rate after high temperature load test of 3.2%, and an ESR change rate after vibration test of 4.2%.

### [Electrolytic capacitors using separator of Working Example 8]

### <Solid electrolytic capacitors>

The solid electrolytic capacitor having a rated voltage of 35V has an initial ESR of 22 mΩ, a short circuit defect rate of 0.0%, an ESR change rate after high temperature load test of 2.3%, and an ESR change rate after vibration test of 3.4%.

The solid electrolytic capacitor having a rated voltage of 80V has an initial ESR of 44 mΩ, a short circuit defect rate of 0.0%, an ESR change rate after high temperature load test of 2.8%, and an ESR change rate after vibration test of 3.8%.

### <Hybrid electrolytic capacitors>

The hybrid electrolytic capacitor having a rated voltage of 35V has an initial ESR of 22 mΩ, a short circuit defect rate of 0.0%, an ESR change rate after high temperature load test of 2.8%, and an ESR change rate after vibration test of 3.5%.

The hybrid electrolytic capacitor having a rated voltage of 125V has an initial ESR of 87 mΩ, a short circuit defect rate of 0.0%, an ESR change rate after high temperature load test of 3.9%, and an ESR change rate after vibration test of 4.2%.

### [Electrolytic capacitors using separator of Working Example 9]

### <Solid electrolytic capacitors>

The solid electrolytic capacitor having a rated voltage of 35V has an initial ESR of 19 mΩ, a short circuit defect rate of 0.0%, an ESR change rate after high temperature load test of 3.1%, and an ESR change rate after vibration test of 1.8%.

The solid electrolytic capacitor having a rated voltage of 80V has an initial ESR of 39 mΩ, a short circuit defect rate of 0.0%, an ESR change rate after high temperature load test of 3.8%, and an ESR change rate after vibration test of 2.0%.

### <Hybrid electrolytic capacitors>

The hybrid electrolytic capacitor having a rated voltage of 35V has an initial ESR of 19 mΩ, a short circuit defect rate of 0.0%, an ESR change rate after high temperature load test of 2.6%, and an ESR change rate after vibration test of 1.0%.

The hybrid electrolytic capacitor having a rated voltage of 125V has an initial ESR of 79 mΩ, a short circuit defect rate of 0.0%, an ESR change rate after high temperature load test of 3.1%, and an ESR change rate after vibration test of 1.9%.

### [Electrolytic capacitors using separator of Working Example 10]

### <Solid electrolytic capacitors>

The solid electrolytic capacitor having a rated voltage of 35V has an initial ESR of 19 mΩ, a short circuit defect rate of 0.0%, an ESR change rate after high temperature load test of 3.5%, and an ESR change rate after vibration test of 1.5%.

The solid electrolytic capacitor having a rated voltage of 80V has an initial ESR of 39 mΩ, a short circuit defect rate of 0.0%, an ESR change rate after high temperature load test of 2.0%, and an ESR change rate after vibration test of 1.6%.

### <Hybrid electrolytic capacitors>

The hybrid electrolytic capacitor having a rated voltage of 35V has an initial ESR of 19 mΩ, a short circuit defect rate of 0.0%, an ESR change rate after high temperature load test of 2.4%, and an ESR change rate after vibration test of 1.5%.

The hybrid electrolytic capacitor having a rated voltage of 125V has an initial ESR of 79 mΩ, a short circuit defect rate of 0.0%, an ESR change rate after high temperature load test of 2.1%, and an ESR change rate after vibration test of 1.0%.

### [Electrolytic capacitors using separator of Reference Example]

### <Solid electrolytic capacitors>

The solid electrolytic capacitor having a rated voltage of 35V has an initial ESR of 25 mΩ, a short circuit defect rate of 0.0%, an ESR change rate after high temperature load test of 3.3%, and an ESR change rate after vibration test of 1.3%.

The solid electrolytic capacitor having a rated voltage of 80V has an initial ESR of 48 mΩ, a short circuit defect rate of 0.0%, an ESR change rate after high temperature load test of 3.9%, and an ESR change rate after vibration test of 1.9%.

### <Hybrid electrolytic capacitors>

The hybrid electrolytic capacitor having a rated voltage of 35V has an initial ESR of 26 mΩ, a short circuit defect rate of 0.0%, an ESR change rate after high temperature load test of 3.5%, and an ESR change rate after vibration test of 1.1%.

The hybrid electrolytic capacitor having a rated voltage of 125V has an initial ESR of 95 mΩ, a short circuit defect rate of 0.0%, an ESR change rate after high temperature load test of 2.5%, and an ESR change rate after vibration test of 1.8%.

### [Electrolytic capacitors using separator of Comparative Example 1]

### <Solid electrolytic capacitors>

The solid electrolytic capacitor having a rated voltage of 35V has an initial ESR of 23 mΩ, a short circuit defect rate of 1.0%, an ESR change rate after high temperature load test of 3.7%, and an ESR change rate after vibration test of 1.4%.

The solid electrolytic capacitor having a rated voltage of 80V has an initial ESR of 45 mΩ, a short circuit defect rate of 1.2%, an ESR change rate after high temperature load test of 3.7%, and an ESR change rate after vibration test of 1.5%.

### <Hybrid electrolytic capacitors>

The hybrid electrolytic capacitor having a rated voltage of 35V has an initial ESR of 23 mΩ, a short circuit defect rate of 1.1%, an ESR change rate after high temperature load test of 3.8%, and an ESR change rate after vibration test of 1.1%.

The hybrid electrolytic capacitor having a rated voltage of 125V has an initial ESR of 88 mΩ, a short circuit defect rate of 1.0%, an ESR change rate after high temperature load test of 2.1%, and an ESR change rate after vibration test of 1.9%.

### [Electrolytic capacitors using separator of Comparative Example 2]

### <Solid electrolytic capacitors>

The solid electrolytic capacitor having a rated voltage of 35V has an initial ESR of 28 mΩ, a short circuit defect rate of 0.0%, an ESR change rate after high temperature load test of 2.4%, and an ESR change rate after vibration test of 15.0%.

The solid electrolytic capacitor having a rated voltage of 80V has an initial ESR of 52 mΩ, a short circuit defect rate of 0.0%, an ESR change rate after high temperature load test of 2.1%, and an ESR change rate after vibration test of 18.1%.

### <Hybrid electrolytic capacitors>

The hybrid electrolytic capacitor having a rated voltage of 35V has an initial ESR of 29 mΩ, short circuit defect rate of 0.0%, ESR change rate after high temperature load test of 3.6%, and ESR change rate after vibration test of 23.7%.

The hybrid electrolytic capacitor having a rated voltage of 125V has an initial ESR of 104 mΩ, short circuit defect rate of 0.0%, ESR change rate after high temperature load test of 3.6%, and ESR change rate after vibration test of 16.1%.

### [Electrolytic capacitors using separator of Comparative Example 3]

### <Solid electrolytic capacitors>

The solid electrolytic capacitor having a rated voltage of 35V has an initial ESR of 20 mΩ, a short circuit defect rate of 0.0%, an ESR change rate after high temperature load test of 3.9%, and an ESR change rate after vibration test of 15.7%.

The solid electrolytic capacitor having a rated voltage of 80V has an initial ESR of 40 mΩ, a short circuit defect rate of 0.0%, an ESR change rate after high temperature load test of 2.1%, and an ESR change rate after vibration test of 16.2%.

### <Hybrid electrolytic capacitors>

The hybrid electrolytic capacitor having a rated voltage of 35V has an initial ESR of 20 mΩ, a short circuit defect rate of 0.0%, an ESR change rate after high temperature load test of 3.4%, and an ESR change rate after vibration test of 22.4%.

The hybrid electrolytic capacitor having a rated voltage of 125V has an initial ESR of 80 mΩ, a short circuit defect rate of 0.0%, an ESR change rate after high temperature load test of 3.8%, and an ESR change rate after vibration test of 23.9%.

### [Electrolytic capacitors using separator of Conventional Example 1]

### <Solid electrolytic capacitors>

The solid electrolytic capacitor having a rated voltage of 35V has an initial ESR of 20 mΩ, a short circuit defect rate of 1.1%, an ESR change rate after high temperature load test of 17.0%, and an ESR change rate after vibration test of 15.3%.

The solid electrolytic capacitor having a rated voltage of 80V has an initial ESR of 40 mΩ, a short circuit defect rate of 1.1%, an ESR change rate after high temperature load test of 23.2%, and an ESR change rate after vibration test of 15.7%.

### <Hybrid electrolytic capacitors>

The hybrid electrolytic capacitor having a rated voltage of 35V has an initial ESR of 20 mΩ, a short circuit defect rate of 1.0%, an ESR change rate after high temperature load test of 17.2%, and an ESR change rate after vibration test of 20.6%.

The hybrid electrolytic capacitor having a rated voltage of 125V has an initial ESR of 80 mΩ, a short circuit defect rate of 1.2%, an ESR change rate after high temperature load test of 23.3%, and an ESR change rate after vibration test of 20.3%.

### [Electrolytic capacitors using separator of Conventional Example 2]

### <Solid electrolytic capacitors>

The solid electrolytic capacitor having a rated voltage of 35V has an initial ESR of 28 mΩ, a short circuit defect rate of 0.0%, an ESR change rate after high temperature load test of 15.6%, and an ESR change rate after vibration test of 14.5%.

The solid electrolytic capacitor having a rated voltage of 80V has an initial ESR of 53 mΩ, a short circuit defect rate of 0.0%, an ESR change rate after high temperature load test of 19.4%, and an ESR change rate after vibration test of 16.2%.

]

### <Hybrid electrolytic capacitors>

The hybrid electrolytic capacitor having a rated voltage of 35V has an initial ESR of 28 mΩ, a short circuit defect rate of 0.0%, an ESR change rate after high temperature load test of 23.9%, and an ESR change rate after vibration test of 17.4%.

The hybrid electrolytic capacitor having a rated voltage of 125V has an initial ESR of 105 mΩ, a short circuit defect rate of 0.0%, an ESR change rate after high temperature load test of 20.8%, and an ESR change rate after vibration test of 19.3%.

### [Electrolytic capacitors using separator of Conventional Example 3]

### <Solid electrolytic capacitors>

The solid electrolytic capacitor having a rated voltage of 35V has an initial ESR of 25 mΩ, a short circuit defect rate of 0.5%, an ESR change rate after high temperature load test of 10.3%, and an ESR change rate after vibration test of 14.4%.

The solid electrolytic capacitor having a rated voltage of 80V has an initial ESR of 48 mΩ, a short circuit defect rate of 0.5%, an ESR change rate after high temperature load test of 10.5%, and an ESR change rate after vibration test of 19.2%.

### <Hybrid electrolytic capacitors>

The hybrid electrolytic capacitor having a rated voltage of 35V has an initial ESR of 26 mΩ, a short circuit defect rate of 0.5%, an ESR change rate after high temperature load test of 10.8%, and an ESR change rate after vibration test of 15.2%.

The hybrid electrolytic capacitor having a rated voltage of 125V has an initial ESR of 96 mΩ, a short circuit defect rate of 0.5%, an ESR change rate after high temperature load test of 10.6%, and an ESR change rate after vibration test of 17.0%.

### [Electrolytic capacitors using separator of Conventional Example 4]

### <Solid electrolytic capacitors>

The solid electrolytic capacitor having a rated voltage of 35V has an initial ESR of 20 mΩ, a short circuit defect rate of 1.2%, an ESR change rate after high temperature load test of 2.3%, and an ESR change rate after vibration test of 19.3%.

The solid electrolytic capacitor having a rated voltage of 80V has an initial ESR of 40 mΩ, a short circuit defect rate of 1.1%, an ESR change rate after high temperature load test of 3.6%, and an ESR change rate after vibration test of 15.1%.

### <Hybrid electrolytic capacitors>

The hybrid electrolytic capacitor having a rated voltage of 35V has an initial ESR of 20 mΩ, a short circuit defect rate of 1.2%, an ESR change rate after high temperature load test of 3.4%, and an ESR change rate after vibration test of 20.1%.

The hybrid electrolytic capacitor having a rated voltage of 125V has an initial ESR of 80 mΩ, a short circuit defect rate of 1.0%, an ESR change rate after high temperature load test of 3.7%, and an ESR change rate after vibration test of 15.7%.

As is evident from Table 3 and the above descriptions, the solid electrolytic capacitors having a rated voltage of 35V using the separators of Working Examples 1 to 10 have an initial ESR of 19 to 23 mΩ, a short circuit defect rate of 0.0%, an ESR change rate after high temperature load test of 2.1 to 4.0%, and an ESR change rate after vibration test of 1.5 to 4.9%, which are low.

The solid electrolytic capacitors having a rated voltage of 80V using the same separators have an initial ESR of 39 to 45 mΩ, a short circuit defect rate of 0.0%, an ESR change rate after high temperature load test of 2.0 to 3.8%, and an ESR change rate after vibration test of 1.2 to 4.3%, which are low.

Moreover, as is evident from Table 4 and the above descriptions, the hybrid electrolytic capacitors having a rated voltage of 35V using the separators of Working Examples 1 to 10 have an initial ESR of 19 to 23 mΩ, a short circuit defect rate of 0.0%, an ESR change rate after high temperature load test of 2.0 to 4.0%, and an ESR change rate after vibration test of 1.0 to 4.5%, which are low.

The hybrid electrolytic capacitors having a rated voltage of 125V using the same separators have an initial ESR of 79 to 88 mΩ, a short circuit defect rate of 0.0%, an ESR change rate after high temperature load test of 2.1 to 3.9%, and an ESR change rate after vibration test of 1.0 to 4.3%, which are low.

The separators of Working Example 1 to 10 have porosity of 65 to 85%, average pore size of 0.5 to 25.0 µm, and Clark stiffness of 1 to 10 cm³/100. As a result, by setting porosity, average pore size and Clark stiffness of the separators within the ranges given above, impregnating ability of the separators is maintained and sufficient flexibility can be given to the separators while being dense separators using fibrillated fibers.

That is, since conductive polymer layers can be formed continuously while maintaining shielding property of the separator, it is possible to improve initial ESR characteristics and short circuit defect rate of the capacitor, and to control degradation of characteristics even in a severe usage environment.

The solid electrolytic capacitors and the hybrid electrolytic capacitors using the separator of Reference Example have higher initial ESRs than those of the respective working examples. Cause thereof is thought to be due to the fact that the separator of Reference Example contains 35% by weight polyvinyl alcohol fibers as a binder material, and that the polyvinyl alcohol is made into a film so as to fill in the gaps between fibers composing the separator, thereby inhibiting impregnation of a polymerization liquid or a dispersion liquid of the conductive polymers, and reducing the continuity of the conductive polymer layers slightly. It is evident from comparison of Working Example 10 and Reference Example that as long as a binder material, such as a wet, heat fusing resin or a paper strengthening agent, is no greater than 30% by mass, the ESR of the capacitors may be reduced.

The separator of Comparative Example 1 has an average pore size of 30.0 µm, which is large. The solid electrolytic capacitors and the hybrid electrolytic capacitors using the separator of Comparative Example 1 have higher short circuit defect rates than those in the respective working examples. Cause thereof is thought to be due to the fact that the average pore size of the separator of Comparative Example 1 is large, resulting in the separator having insufficient denseness, allowing a burr etc. of the electrode foil to easily pass through the separator, and making the short-circuit resistance lower. It is evident from comparison of Comparative Example 1 and respective working examples that the average pore size of the separator is preferably no greater than 25.0 µm.

The separator of Comparative Example 2 has an average pore size of 0.1 µm and a Clark stiffness of 0.5 cm³/100. The solid electrolytic capacitors and the hybrid electrolytic capacitors using the separator of Comparative Example 2 have higher initial ESRs and higher ESR change rates after vibration test than those in the respective working examples.

Cause thereof is thought to be due to the fact that the average pore size of the separator of Comparative Example 2 is small, thereby making the separator excessively dense, inhibiting impregnation of a polymerization liquid or a dispersion liquid of the conductive polymers, and reducing the continuity of the conductive polymer layers, resulting in a higher initial ESR. Moreover, it is also thought that due to the Clark stiffness being low, the wound element in a tense state is easily loosened, the separator does not function as a buffer material, the conductive polymers collapse in a high-vibration environment, and the continuity of the conductive polymer layers is reduced. It is evident from comparison of Comparative Example 2 and the respective working examples that the average pore size is preferably 0.5 µm or greater, and the Clark stiffness is preferably 1 cm³/100 or greater.

The separator of Comparative Example 3 has a Clark stiffness of 15.0 cm³/100. The solid electrolytic capacitors and the hybrid electrolytic capacitors using the separator of Comparative Example 3 have higher ESR change rates after vibration test. Cause thereof is thought to be due to the fact that the Clark stiffness of the separator of Comparative Example 2 is high, and that the force repelling outward from the inside of the wound element in a wound state is too strong, which disables the separator from functioning as a buffer material, making the conductive polymers collapse in a high-vibration environment, and resulting in reduction in the continuity of the conductive polymer layers. It is evident from comparison of Comparative Example 3 and the respective working examples that the Clark stiffness is preferably no greater than 10 cm³/100.

Comparing performance of the solid electrolytic capacitors and the hybrid electrolytic capacitors using the separator of Conventional Example 1, the respective working examples show lower short circuit defect rates, lower ESR change rates after high temperature load test, and lower ESR change rates after vibration test. Cause thereof is thought to be due to the fact that the separator of Conventional Example 1 has a large average pore size of 27.0 µm, a low Clark stiffness of 0.8 cm³/100, insufficient denseness, and looseness of the wound element, which make the conductive polymers collapse, thereby keeping the short circuit defect rates and the ESR change rates after vibration test from decreasing.

Moreover, the separator of Conventional Example 1 is constituted by only polyethene terephthalate fibers that are non-fibrillated fibers, thereby having insufficient denseness and heat resistance, which is thought to keep the short circuit defect rate and the ESR change rate after high temperature load test from decreasing.

Comparing performance of the solid electrolytic capacitors and the hybrid electrolytic capacitors using the separator of Conventional Example 2, the respective working examples show lower initial ESRs, lower ESR change rates after high temperature load test, and lower ESR change rates after vibration test. Cause thereof is thought to be due to the fact that the separator of Conventional Example 2 has a low porosity of 53.4% and a high Clark stiffness of 11.0 cm³/100, which make the gaps between fibers too close and weakens the impregnating ability of the polymerization liquid and the dispersion liquid of the conductive polymers, and that the force repelling outward from the inside of the wound element is too strong, thereby keeping the initial ESR and the ESR change rates after vibration test from decreasing.

Furthermore, the separator of Comparative Example 2 is constituted by fibrillated acrylic fibers and homo-acrylic fibers, having insufficient heat resistance, which is thought to keep the ESR change rate after high temperature load test from decreasing.

Comparing performance of the solid electrolytic capacitors and the hybrid electrolytic capacitors using the separator of Conventional Example 3, the respective working examples show lower initial ESRs, lower short circuit defect rates, lower ESR change rates after high temperature load test, and lower ESR change rates after vibration test. Cause thereof is thought to be due to the fact that the separator of Conventional Example 3 has a large average pore size of 26.0 µm and a high Clark stiffness of 13.0 cm³/100, which make the denseness of the separator insufficient, and an overly strong force repelling outward from the inside of the wound element, thereby keeping the short circuit defect rates and the ESR change rates after vibration test from decreasing.

Moreover, since the separator of Conventional Example 3 contains nylon 9MT fibers, which are non-fibrillated fibers, the impregnating ability, the denseness, and the heat resistance are all insufficient. These are thought to be a cause of keeping the short circuit defect rate and the ESR change rate after high temperature load test from decreasing.

Comparing performance of the solid electrolytic capacitors and the hybrid electrolytic capacitors using the separator of Conventional Example 4, the respective working examples show lower short circuit defect rates and lower ESR change rates after vibration test. Cause thereof is thought to be due to the fact that the separator of Conventional Example 4 has a high porosity of 87.1% and a high Clark stiffness of 14.0 cm³/100, insufficient denseness, and an overly strong force repelling outward from the inside of the wound element, thereby keeping the short circuit defect rates and the ESR change rates after vibration test from decreasing. Furthermore, the separator of Conventional Example 4 is constituted by only aramid fibers, which are non-fibrillated fibers, having insufficient denseness, which is thought to keep the short circuit defect rate and the ESR change rate after high temperature load test from decreasing.

Comparison of the respective working examples, reference example, comparative examples and conventional examples shows that the porosity of the separators is preferably within the range of 65 to 85%. Moreover, it is understood from Working Examples 3, 4, 6, 7, 9, and 10 that the porosity is further preferred within the range of 70 to 80%.

Furthermore, comparison of the respective working examples, reference example, comparative examples and conventional examples shows that the Clark stiffness of the separators is preferably within the range of 1 to 10 cm³/100. Yet further, it is understood from Working Examples 1, 3, 4, 6, 9, and 10, Reference Example 1, and Comparative Example 1 that the Clark stiffness is further preferred within the range of 1.5 to 7.0 cm³/100.

As described above, according to the embodiment of the present invention, control of the porosity of the separator within the range of 65 to 85%, the average pore size of the same within the range of 0.5 to 25.0 µm, and the Clark stiffness of the same within the range of 1 to 10 cm³/100 allows a separator to have a homogeneous internal paper structure and sufficient flexibility. The solid electrolytic capacitor using the separator of the present invention has a low initial ESR and a low short-circuit defect rate, and moreover can control characteristic degradation and contribute to improvement in reliability of the solid electrolytic capacitor and the hybrid electrolytic capacitor even in a severe usage environment, such as high temperature and high vibration, in recent demand.

## Claims

1. A separator for aluminum electrolytic capacitors interposed between paired electrodes,
comprising a synthetic resin fiber; wherein the separator has porosity within a range of 65 to 85%, **characterized by** average pore size within a range of 0.5 to 25.0 µm, and Clark stiffness within a range of 1 to 10 cm³/100.

2. The separator for aluminum electrolytic capacitors of Claim 1, wherein the synthetic resin fiber is a polyamide fiber.

3. The separator for aluminum electrolytic capacitors of either Claim 1 or Claim 2, wherein the synthetic resin fiber is a fibrillated fiber.

4. An aluminum electrolytic capacitor using the separator of any one of Claims 1 to 3.

5. The aluminum electrolytic capacitor of Claim 4, using a conductive polymer as a cathode material.

## Patentansprüche

1. Separator für Aluminium-Elektrolytkondensatoren, der zwischen gepaarten Elektroden angeordnet ist,
umfassend eine Kunstharzfaser, wobei der Separator eine Porosität im Bereich von 65 bis 85 % aufweist, **gekennzeichnet durch**
durchschnittliche Porengröße im Bereich von 0,5 bis 25,0 µm und Clark-Steifigkeit im Bereich von 1 bis 10 cm³/100.

2. Separator für Aluminium-Elektrolytkondensatoren nach Anspruch 1, wobei die Kunstharzfaser eine Polyamidfaser ist.

3. Separator für Aluminium-Elektrolytkondensatoren nach Anspruch 1 oder Anspruch 2, wobei die Kunstharzfaser eine fibrillierte Faser ist.

4. Aluminium-Elektrolytkondensator unter Verwendung des Separators nach einem der Ansprüche 1 bis 3.

5. Aluminium-Elektrolytkondensator nach Anspruch 4, der ein leitfähiges Polymer als Kathodenmaterial verwendet.

## Revendications

1. Un séparateur pour des condensateurs électrolytiques en aluminium, interposé entre des électrodes appariées,
comprenant une fibre de résine synthétique ; le séparateur présente une porosité comprise entre 65 et 85 %, **caractérisé par**
une taille moyenne de pores comprise entre 0,5 et 25,0µm et une rigidité de Clark comprise entre 1 et 10cm³/100.

2. Le séparateur pour des condensateurs électrolytiques en aluminium selon la revendication **1,** dans lequel la fibre de résine synthétique est une fibre de polyamide.

3. Le séparateur pour des condensateurs électrolytiques en aluminium selon la revendication 1 ou la revendication 2, dans lequel la fibre de résine synthétique est une fibre fibrillée.

4. Un condensateur électrolytique en aluminium utilisant le séparateur selon l'une quelconque des revendications 1 à 3.

5. Le condensateur électrolytique en aluminium selon la revendication 4, utilisant un polymère conducteur en tant que matériau de cathode.
